# EUROPEAN PATENT SPECIFICATION

(11) **EP 3 295 215 B1**
(45) Date of publication and mention of the grant of the patent: **01.12.2021**
(21) Application number: 16731659.5
(22) Date of filing: 13.05.2016
(51) Int. Cl.: G01T 1/29

(54) **APPARATUS FOR THE CALIBRATION OF BEAMS OF CHARGED PARTICLES FOR EXTERNAL RADIOTHERAPY, IN PARTICULAR BEAMS OF PROTONS, CARBON IONS, AND OTHER ION SPECIES, EMITTED BY PARTICLE ACCELERATORS, AND CORRESPONDING CALIBRATION METHOD**
VORRICHTUNG ZUR KALIBRIERUNG VON STRAHLEN VON LADUNGSTRÄGERTEILCHEN ZUR EXTERNEN RADIOTHERAPIE, INSBESONDERE VON STRAHLEN VON PROTONEN, KOHLENSTOFFIONEN UND ANDEREN IONENARTEN, UND ZUGEHÖRIGES KALIBRIERUNGSVERFAHREN
APPAREIL POUR L'ÉTALONNAGE DE FAISCEAUX DE PARTICULES CHARGÉES POUR RADIOTHÉRAPIE EXTERNE, EN PARTICULIER DES FAISCEAUX DE PROTONS, D'IONS DE CARBONE, ET D'AUTRES ESPÈCES D'IONS, ÉMIS PAR DES ACCÉLÉRATEURS DE PARTICULES, ET PROCÉDÉ D'ÉTALONNAGE CORRESPONDANT

(30) Priority: 15.05.2015 IT UB20150678
(43) Date of publication of application: 21.03.2018
(73) Proprietor: De.Tec.Tor S.r.l., 10153 Torino (TO) (IT)
(72) Inventor: PITTA, Giuseppe, 10153 Torino (IT); LAVAGNO, Marco, 10153 Torino (IT); LA ROSA, Vanessa, 10153 Torino (IT); ZONA, Mauro, 10153 Torino (IT)
(74) Representative: Crovini, Giorgio
(86) International application number: PCT/IB2016/052769
(87) International publication number: WO 2016/185340

(56) References cited:
- EP-A1- 1 974 770
- WO-A1-2010/106193
- GB-A- 2 509 842
- JP-A- 2012 002 526

## Description

### Technical field

The present description relates to an apparatus for the calibration of beams of charged particles for external radiotherapy, in particular protons, carbon ions, and other ion species, emitted by particle accelerators, comprising at least one sensor with multilayer ionization chambers, which includes a plurality of sensor channels.

Various embodiments may be applied to calibration of intensity, shape, and position of a beam of charged particles.

### Technological background

In the field of external radiotherapy with charged particles, adrotherapy, which uses protons and carbon ions and other ion species, is one of the most advanced therapies, affording a finite penetration depth, low deposition of energy at input and marked fall-off, namely, the distal decay of the distribution of the dose. However, some of its benefits may become a risk for the patient on account of the uncertainties during administration of the treatment. It is hence of fundamental importance to calibrate regularly the energy and control the spot size, position, and intensity of the beams of particles to be administered prior to the sessions of treatment of the patient.

This is typically carried out via Quality Assurance (QA) procedures, which are very burdensome in terms of time and are carried out on a daily basis in health-care facilities equipped with different devices and instruments for each parameter to be controlled. This determines high costs for health-care facilities in terms of equipment, staff, and time to be dedicated to the QA activities.

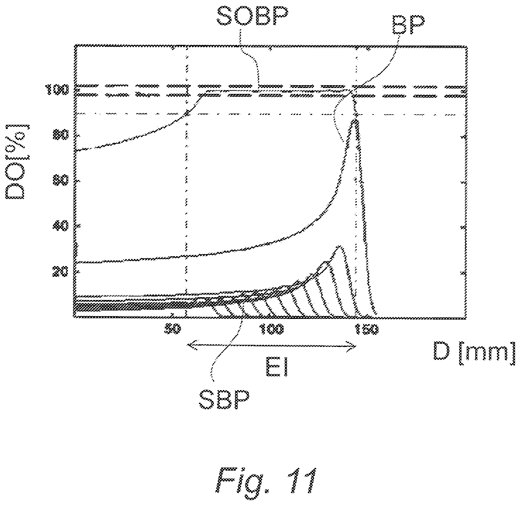

The interaction of proton and ion beams with human tissue (which is mainly made up of water) enables the majority of the dose to be conveyed to a precise depth, following the profile of the so-called Bragg peak. In this way, it is possible to increase the precision on the target, limiting the dose that may reach healthy tissues. Moreover, the distal and lateral fall-off of a proton beam is considerably better than the lateral penumbra caused by a photon beam, enabling a fast decay of the dose in the vicinity of adjacent critical structures. As a consequence, the total energy deposited in a patient for a given target dose is lower than that of conventional treatments using photons. However, the Bragg peak for a single-energy proton and ion beam is so narrow that only a limited interval of depth can be treated with a very high dose. In order to widen the interval of treatment depth and supply a uniform dose on the tumour, a spread-out Bragg peak (SOBP) is created as set of pure peaks sent at a decreasing depth (by varying the energy of the particles) and with a reduced dose to obtain the desired modulation. Figure 11 shows the dose DO from non-modulated proton beams (pure Bragg peak BP) and modulated proton beams (spread-out Bragg peak SOBP). It also shows the sets of peaks SP, the amplitude of which is weighted. Figure 11 also indicates the interval EI of deposition of the energy of the spread-out peak.

Since protons and ions deposit their energy dose in a relatively small volume, corresponding to the interval EI, it is of fundamental importance to control correctly the position of the interval EI of deposition of the beam of particles prior to treatment of patients. Calibration of the instrument (size, shape, and intensity of the beam) and verification of the depth-dose curves are carried out during the QA procedures.

According to the prior art, it is known to use for this purpose small ionization chambers or diodes that move through dummies made of tissue-equivalent materials (for example, water or perspex). In this context, it has been suggested to use multilayer ionization chambers (MLICs) in order to accelerate the QA procedures in health-care facilities, as is described, for example, in Lin, S. et al., (2009) "A multilayer ionization chamber for proton beam Bragg peak curve measurements", Proceedings of the International Conference of the Particle Therapy CoOperative Group (PTCOG), Heidelberg.

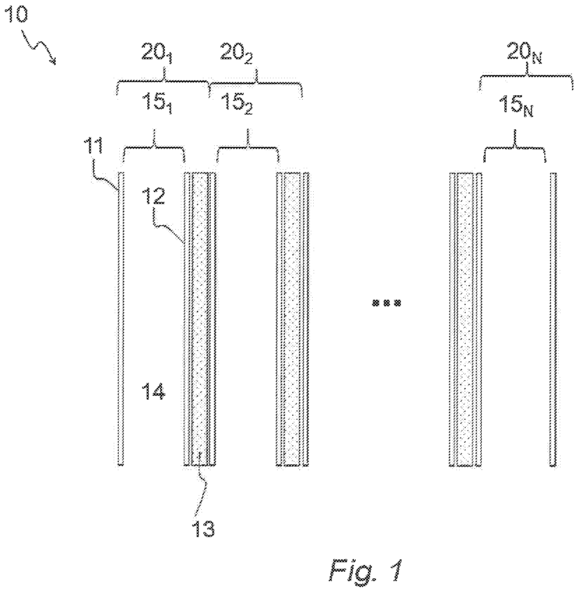

The principle that supervises use of the above apparatuses is the possibility of measuring the charge deposited on each of the anodes (or cathodes) of the various layers of the device while the beam of particles passes through a stack of calibrated waterequivalent absorbers. This enables instantaneous evaluation of the depth-dose distribution of the beam (whether single-energy beam or spread-out Bragg peaks) by virtue of the simultaneous reading of all the ionization chambers that make up the MLIC device. The typical structure of an MLIC is illustrated in Figure 1.

Figure 1 shows in this connection an MLIC sensor 10, which comprises a plurality of sensor structures, or channels, 20, in Figure 1 20₁...20_{N}, comprising pairs 15₁...15_{N} of anodes 11 and cathodes 12, separated by an ionization chamber 14, i.e., a space that identifies the ionization region, and followed by an absorber layer 13.

The total number of channels identifies the maximum energy range of the particles that can be measured, whereas the materials and the physical thicknesses of each channel determine the waterequivalent thickness of the MLIC sensor 10. Known MLIC sensors comprise a fixed number of channels, for example 128 or 180 channels, which can, however, be exploited fully only in health-care centres that carry out treatments with beams at high energy (>220 MeV). These centres represent only a part (67%) of the currently operating centres.

The calibrations of the spot size, position, and intensity of the beam are typically carried out using instruments such as Gafchromic EBT films and Faraday cups. The films are very costly and require considerable time, given that they are single-use and require an offline analysis of the images acquired.

### Document WO2010/106193 discloses a measuring apparatus in which a plurality of sensor elements forms a stack inserted between support plates. These support plates, in particular a floor or bottom plate, a back wall and a side wall, encompass the whole stack of sensor elements.

### Object and summary

The object of embodiments described herein is to improve the apparatuses and methods according to the known art as discussed previously.

Various embodiments achieve the above object thanks to an apparatus having the characteristics recalled in the ensuing claims.

Various embodiments also refer to a corresponding calibration method.

The claims form an integral part of the technical teachings provided herein in relation to the invention.

### Brief description of the drawings

Various embodiments will now be described, purely by way of example, with reference to the annexed drawings, wherein:
- Figures 1 and 11 have already been described previously;
- Figure 2 shows a configuration of use of the calibration apparatus described;
- Figure 3 shows four views, two perspective views and two side views, of the calibration apparatus described;
- Figures 4, 5, 6, 7, 8, and 9 show exploded perspective views of details of the calibration apparatus described; and
- Figure 10 shows a detailed exploded perspective view of a variant embodiment of the calibration apparatus described.

### Detailed description

In the ensuing description, numerous specific details are provided in order to enable maximum understanding of the embodiments provided by way of example. The embodiments may be implemented with or without specific details or else with other methods, components, materials, etc. In other circumstances, well-known structures, materials, or operations are not illustrated or described in detail so that aspects of the embodiments will not be obscured. Reference, in the course of the present description, to "an embodiment" or "one embodiment" is meant to indicate that a particular structure, feature, or characteristic described in connection with the embodiment is comprised in at least one embodiment. Hence, phrases such as "in an embodiment", "in one embodiment", or the like, that may appear in various points of this description do not necessarily refer to one and the same embodiment. Moreover, the particular structures, features, or characteristics may be combined in any convenient way in one or more embodiments.

The notation and references are provided herein only for convenience of the reader and do not define the sphere of protection or the scope of the embodiments.

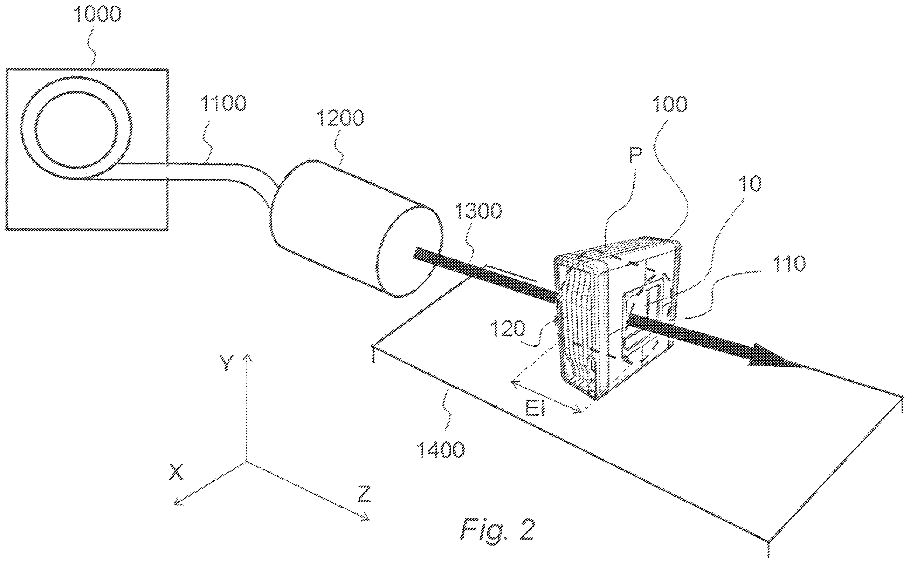

In this regard, Figure 2 illustrates an accelerator 1000, which is able to generate a beam of charged particles 1300 conveyed through a tunnel 1100 and an outlet mouth 1200 in the direction of a spatial region P, which in the figure is represented as being cylindrical of a length equal to the interval EI of deposition of the energy of the spread-out peak, even though in general it may assume also other shapes. This spatial region P is located, for example, above a therapy table 1400 on which a patient to be treated can be positioned. In the spatial region P, for purposes of calibration, an apparatus for the calibration of beams of charged particles 100 is positioned in such a way that the beam of particles 1300 passes through MLIC sensors 10 that make up the calibration apparatus 100. This apparatus 100 is modular; i.e., it comprises a plurality of aligned sensor modules.

In Figure 2 it may be noted how the modular MLIC calibration apparatus 100 comprises an outer casing 110, of a substantially parallelepipedal shape, which comprises within it modular elements 120, each including an MLIC sensor 10, or another type of sensor, and a supporting frame for the aforesaid sensor.

The calibration apparatus 100 enables instantaneous evaluation of the characteristics of the therapeutic beam of particles 1300 in the directions X, Y, and Z, where Z corresponds to the direction along which the depth D is evaluated. In this way, the calibration apparatus 100 replaces the multiple instruments used according to the prior art and reduces the time necessary for calibration and for the QA protocols.

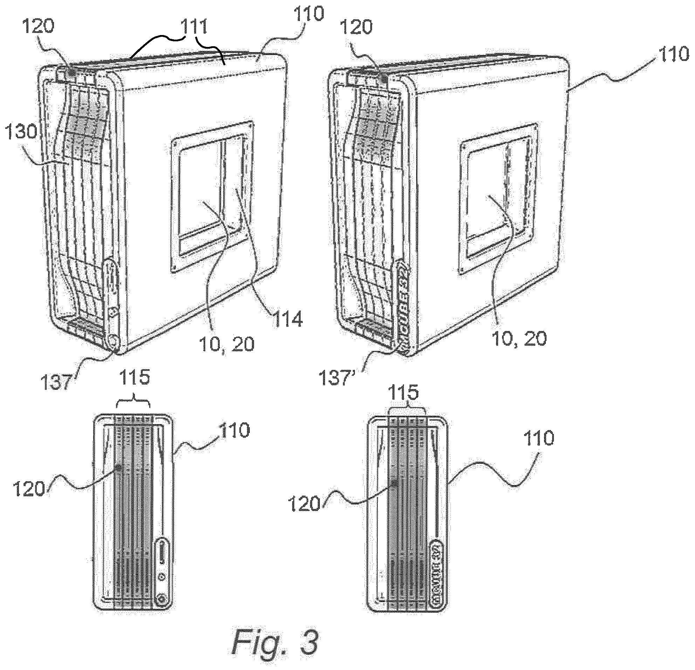

Figure 3 shows in general in four schematic views, two perspective views and two side views, the calibration apparatus 100 of a modular type, which includes a horizontal stack 115 of modular elements 120, comprising frames 130 each suitable for supporting, for example, an MLIC sensor 10, which includes at least one ionization chamber, so that the stack of modular elements 120 identifies as a whole an MLIC sensor apparatus with a stack of ionization chambers suitable for evaluation of the depth-dose curve of the beam of particles 1300 for different energies and modulations according to the number of modular elements 120. The stack 115 of modular elements 120 is, however, also suitable for insertion, via the frames 130, of ionization chambers of a different type, such as chambers of a strip and/or pixel type, which provide additional information on the two-dimensional profile, position, and shape of the particle beam 1300, during one and the same measurement cycle, by virtue of simultaneous reading of all the ionization chambers comprised in the calibration apparatus 100.

Each independent modular element 120, associated to one frame 130, preferably comprises eight sensor channels 20 and can be easily replaced in the event of failure of one of its own sensors, without any need to intervene on the other modular elements 120, thus reducing the out-of-service time of the calibration apparatus 100.

Since the apparatus described is modular, it can be configured according to the requirements and resources of the health-care centre in terms of maximum energy of the beam available and can be easily updated or modified, if necessary. In this way, for example, a centre provided just with an eye-treatment room (maximum energy: 60-70 MeV) would require only 32 channels (i.e., four modular elements 120), whereas a paediatric centre (maximum energy: 160 MeV) would require only 80 channels (i.e., ten modular elements 120). This reduces further the total costs for the QA instruments.

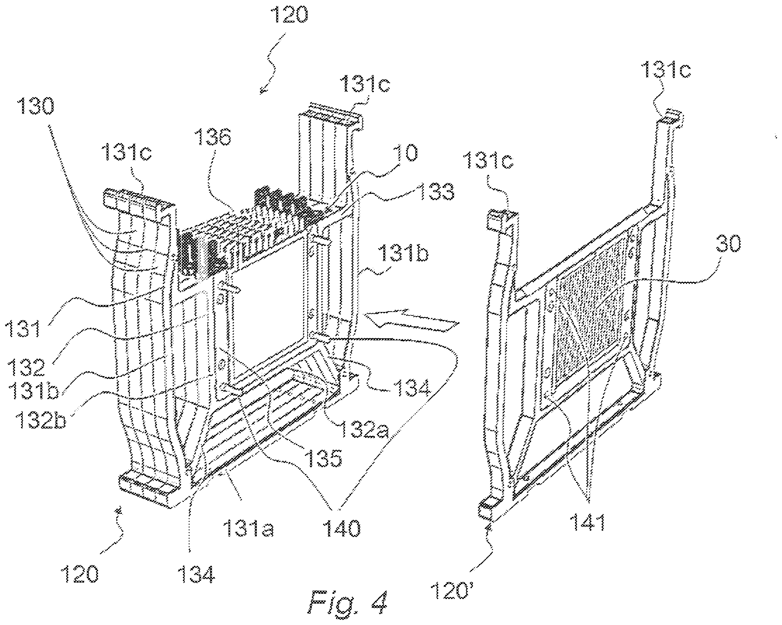

Figure 4 is an exploded schematic view of the detail of the modular elements 120, which comprise, as mentioned, a frame 130, made, for example, of aluminium or plastic material.

The above frame 130 comprises a first, outer, frame structure 131 having the shape substantially of a C open at the top, i.e., having a bottom cross member 131a departing from the ends of which are two vertical uprights 131b. The top ends of the uprights 131b are bent outwards to identify two seats 131c for resting of a cover 117, which, as illustrated in what follows, closes, like a top cross member, the outer frame 131. Set within the C-shaped outer frame 131, which is larger, supported by horizontal arms, one of which is designated by 133 and the other, set at 45°, is designated by 134, which extend from the first frame structure 131, respectively from the top and bottom parts of the uprights 131b, is a second, inner, C-shaped frame structure 132, of a size smaller than the outer frame 131, comprising a respective bottom cross member 132a and uprights 132b. The above inner frame 132 is designed to support the sensor, in particular the sensor 10. This sensor 10 is supported in a fixing frame 135, made, in particular, of fiberglass, with dimensions suitable for being inserted in the second frame structure 132.

As may be seen in Figure 4, in addition to the stack 115 of a number N of modular elements 120 that equip, for example, a sensor 10, according to a preferred embodiment it is envisaged to add to the stack 115, preferably on the side where the beam 1300 exits, at least one further modular element 120' that is made up of a frame 130, which, however, in this case equips a sensor 30 with ionization chamber of a strip type (or alternatively of a pixel type), which supplies additional information on the two-dimensional profile, position, and shape, of the beam 1300. This makes it possible to obtain simultaneously information in all three directions X, Y, Z.

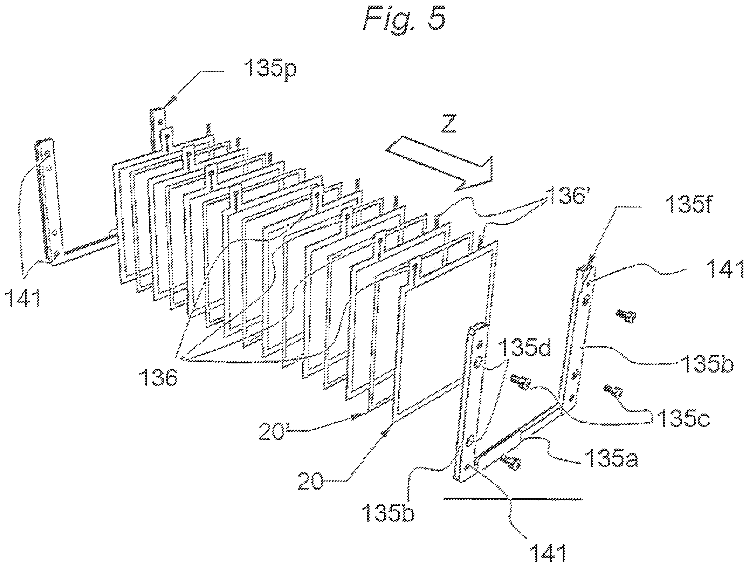

Figure 5 is a detailed exploded view of the fixing frame 135, which supports within it the sensor 10. As may be noted, also the fixing frame 135 has the shape of a C, comprising a bottom cross member 135a and two uprights 135b that depart vertically from the above cross member 135a. The dimensions of the above cross member 135a and uprights 135b are such as to enable insertion of the second structure 132 in the internal region, as will be described in greater detail hereinafter. The frame 135 is divided along a plane parallel to the main plane of the frame (vertical in the drawing, along the axis Y according to what is indicated in Figure 2) into two equal half-frames, a front one 135f and a rear one 135p. As illustrated in Figure 5, the first, front, half-frame 135f and the second, rear, half-frame 135p comprise between them the stack of eight channels 20, of a rectangular shape, separated from one another by respective spacers 20', i.e., by rectangular frames of fibreglass that rest along the perimeter of the channels 20. The uprights of the first half-frame 135f and of the second half-frame 135p present threaded holes 135d, in particular two for each upright, in which screws 135c are inserted for fastening the first half-frame to the second half-frame, thus pack tightening the stack of channels 20 and spacers 20'. As illustrated in Figure 5, the channels 20 have a substantially square shape, and on the open side of the frame 135 the channels 20 have an anode tab 136 set in cantilever fashion in a vertical direction (axis Y, according to what is indicated in Figure 2), which carries a metal contact path with a guard ring of the sensor so that the signal can be picked up from the channel 20. In each set of four channels 20, the tabs 136 are arranged in staggered positions along the horizontal axis (axis X according to what is indicated in Figure 2) to enable easier access. Once again on the same side of the sensor 20 a further cathode tab 136' is present set in cantilever fashion in a vertical direction, and also the tabs 136' are arranged in staggered positions along the horizontal axis.

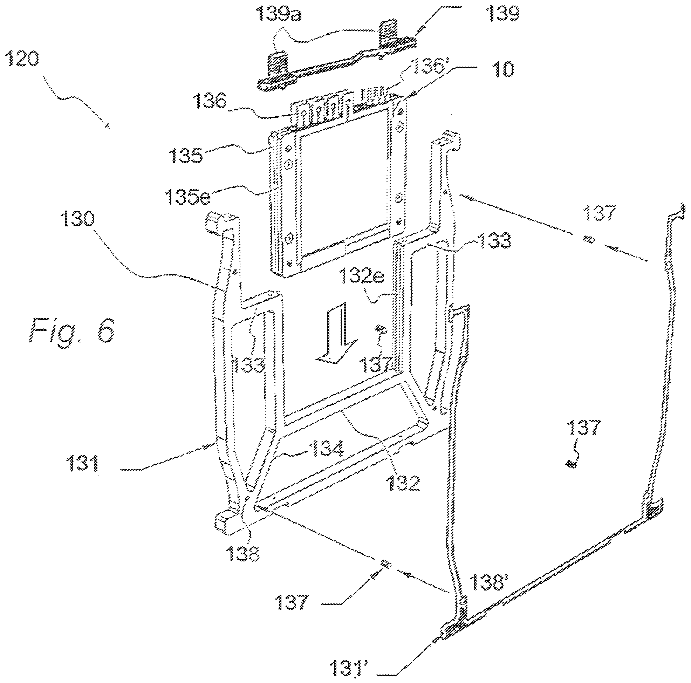

Figure 6 illustrates the sensor 10 with the fixing frame 135 fastened via the screws 135c in the holes 135d. As may be noted, the uprights of the two coupled half-frames 135p and 135f identify on their outer side a vertical groove 135e designed to slide along a corresponding guide 132e provided on the inside of the uprights 132b of the inner frame 132. In this way, the sensor 10 can be inserted by sliding it along the guide 132e in the frame 132. The guide 132e hence operates as retention element once the sensor 10 is inserted in the inner frame structure 132, in particular in regard to stresses along the axis Z. As shown in Figure 6, the frame 130 is associated to a gasket 131', which substantially reproduces the shape of the outer frame 131 and which is fixed to the outer frame 131 via alignment pins 137 inserted in holes 138 and 138' made in corresponding positions on the outer frame 131 and on the gasket 131'. Figure 6 illustrates also a fixing/extraction bracket 139, which is fixed via screws on the top part of the sensor 10 in the fixing frame 135, and comprises tabs 139a that can be gripped for inserting and extracting the sensor 10 into/from the frame 130.

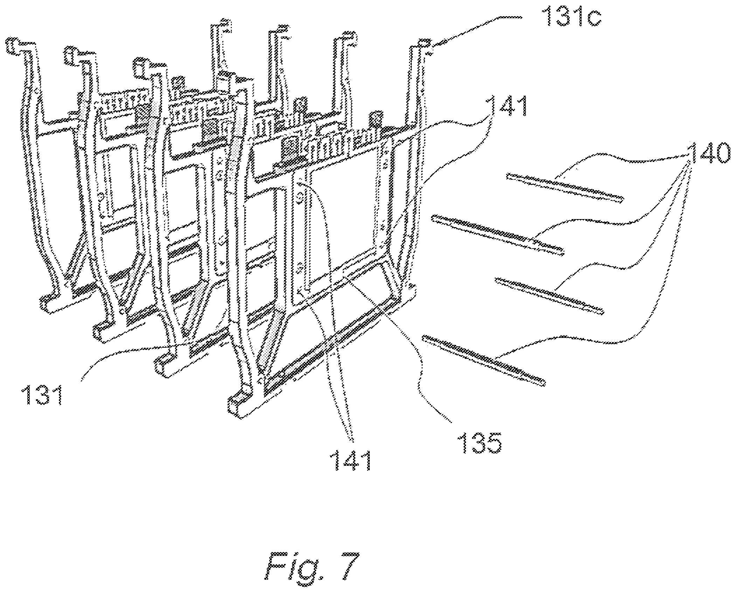

Shown in Figure 7 is a set of frames 130, which carry the sensors 10 mounted in their fixing frames 135, and alignment pins 140, which are inserted in through holes 141 on the uprights of the fixing frame 135 for aligning the frames 130 in a stack. The alignment pins 140, which are inserted substantially in the direction of the depth, hence have a length such as to exceed the overall thickness of the frames 130 that make up the stack 115 in the direction of the depth (axis Z in Figure 2).

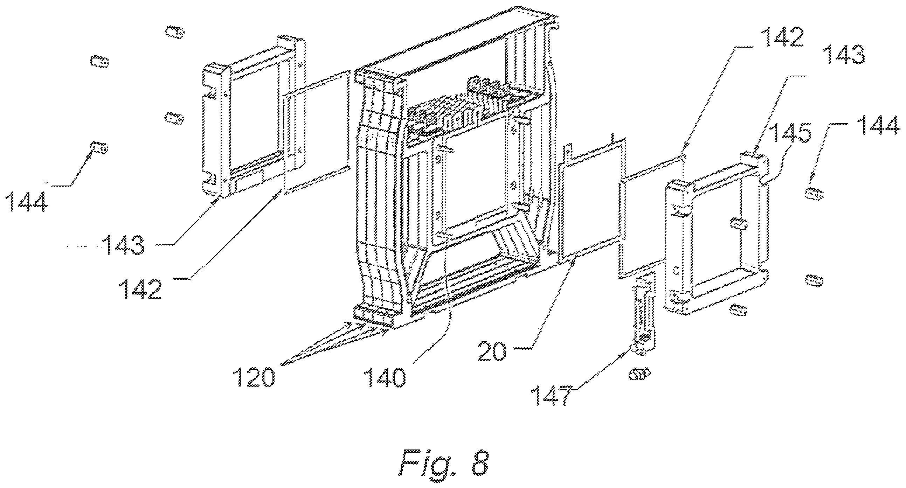

As shown in Figure 8, after insertion of the alignment pins 140 in the through holes 141, the stack 115 of frames 130 is completed by inserting on one side, corresponding to the region where the beam 1300 exits, a further odd channel 20. The function of the odd channel 20 derives from the fact that, between the channels 20, each anode represents the cathode of the next pair, and hence the odd sensor serves to complete the anode-cathode pairs.

The signal is then carried, via a cable, to the appropriate read-out electronics. Here the signal will be processed and then handled outside the detector.

As shown in Figure 8, both from the side of entry of the beam 1300 and from the side of exit thereof respective inner frames 143, which have a rectangular shape with dimensions substantially corresponding to those of the fixing frame 135, are then inserted and are rested on the latter (or on the further odd channel) via a rectangular frame 142 to apply a protective sheet, in particular a Mylar sheet, for protecting the sensitive elements of the sensor 10, for example from dust, and which also has dimensions substantially corresponding to those of the spacers 20' .

The above inner frames 143 have holes 145 along axes corresponding to those of the alignment pins 140 for insertion of fixing threaded elements 144, which couple to the ends of the alignment pins 140 in order to block the stack 115 of modular elements 120. These fixing threaded elements 144 are, in the example, internally threaded bushings, which are able to engage the threaded ends of the pins 140. Fixed on the outer side of the upright of the frame 143 that corresponds to the region of exit of the particle beam 1300 is a connector assembly 147.

Hence, the calibration apparatus 100 enables calibration of beams of charged particles, for example, via the following operations:
providing in said apparatus 100 a plurality of sensors with multilayer ionization chambers 10 and at least one sensor 30 with ionization chamber, which is able to supply information on the two-dimensional profile of the beam of charged particles 1300; and
acquiring information from said sensors with multilayer ionization chambers 10 and at least one sensor 30 with ionization chamber which is able to supply information on the two-dimensional profile of the beam of charged particles 1300 in one and the same measurement cycle for carrying out simultaneously the calibrations of interval, position, dimension, and intensity of the beam of charged particles 1300.

Moreover, the calibration apparatus 100 enables calibration of beams of charged particles by inserting and removing sensor elements, whether multilayer ionization chambers 10 or sensors 30 with ionization chamber which is able to supply information on the two-dimensional profile of the beam of charged particles 1300, according to the need, for example as a function of the energy of the beam 1300. In this context, the apparatus enables a calibration that, for example, envisages:
carrying out an operation of insertion or removal of a sensor element 10, 30 into/from said calibration apparatus 100, which comprises the steps of:
removing the alignment pins 140 from the holes 141 of the fixing frames 135 of the sensor elements 10, 30 comprised in the stack 115;
inserting or removing a sensor element 10, 30 mounted in its own fixing frame 135 into/from the respective frame 130; and
inserting the alignment pins 140 into the holes 141 of the fixing frames 135 of the sensor elements 10, 30 now comprised in said stack 115.

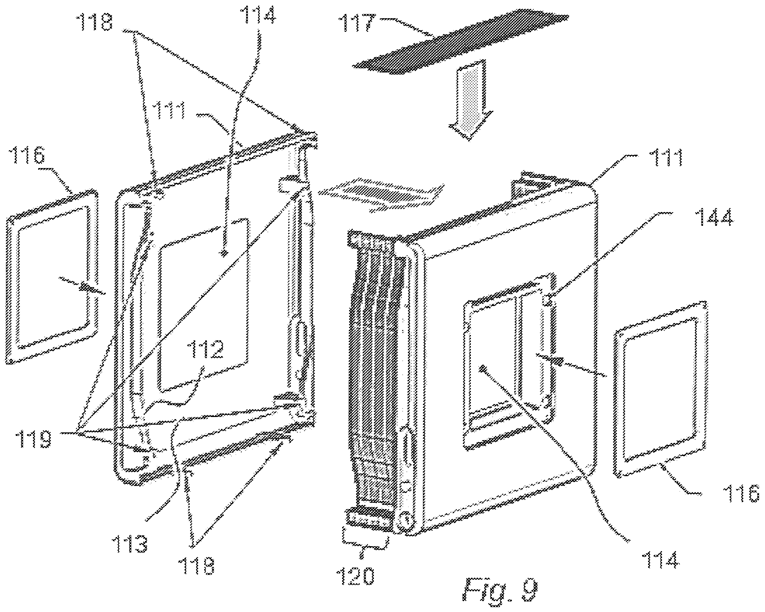

Shown in Figure 9 is the outer casing 110 associated to the stack 115 of modular elements 120. As may be noted, the outer casing 110 comprises two masks 111 of a rectangular shape with dimensions that are substantially the same as those of the frames 130, which are to be applied on the outermost elements 120 of the stack 115. These masks 111 comprise, on their inner surfaces facing the frames 130, ribbings or projections 112, which reproduce the shape of the outer perimeter of the uprights 131b of the outer frame 131, defining in the rectangular surface of the mask 111 inner regions 113 having a shape designed to receive the uprights 131b of the outer frame 131, in particular a similar shape, and, towards the sides of the mask 111, outer regions. In addition, these masks 111 comprise, in a central region corresponding to the position of the inner frames 143, windows 114 of a rectangular shape similar to that of the frame 143, but with dimensions slightly greater than those of the frame 143, so that, when the masks 111 are associated to the stack 115 of frames 120, they in any case enable access to the fixing threaded elements 144. These fixing threaded elements 144 are protected by a further outer rectangular frame 116, with an outer perimeter such as to enable insertion into the window 114 and an internal perimeter substantially corresponding to the space delimited internally by the inner frame 143. The top open side of the C shape identified by the inner frame 131, for the thickness defined by the set of frames, is closed via a top cover 117.

Extending from the internal edge of the masks 111 in the upper and lower region are tabs 118 for fixing screws. Present on the projections 112 are, instead, seats for pins 119, in positions substantially corresponding to those of the holes 138.

With reference to Figure 3 already mentioned and partially described, illustrated therein is then the calibration apparatus 100 with its own outer casing 110 closed, which comprises inside it the stack 115 of modular elements 120, each comprising MLIC sensors 10 with a number of channels 20. On one side the set of connectors 137 is available. It should be noted that the two masks 111 one the side of entry and exit of the particle beam 1300 are in any case substantially identical. Consequently, in Figure 3 in the second mask 111 a plate 137' is present bearing the trademark of the apparatus, but a connector 137 could be equally inserted.

The outer casing 110 may be made of plastic material or else of metal, for example aluminium.

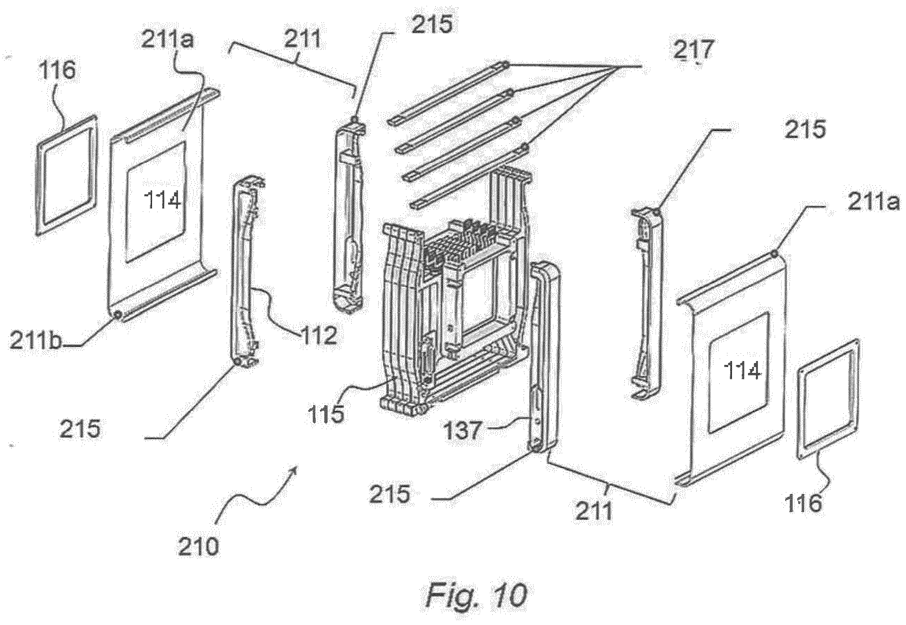

Figure 10 is an exploded view of a variant of the outer casing 110, designated by 210, where, instead of having a moulded mask 111 made of plastic or metal material, each mask 211 is formed by a rectangular plate 211a, with top and bottom edges 211b bent along the axis of depth in the direction of the stack 115, and two corner elements 215 having projections 112, as in the mask 111, and having a shape corresponding to the outer regions 113' of the mask 111. Instead of the top cover 117, for each frame 130 a top closing rod 217 is used, the ends of which rest on the seats 131c of the upright of the outer frame 131.

Hence, from what has been set forth above, the solution described and the corresponding advantages emerge clearly.

The apparatus according to the invention is advantageously a single apparatus for carrying out both calibrations of interval, and calibrations of position, dimensions of the beam, and intensity, in order to accelerate the QA procedures to be carried out, thus increasing the number of patients treated in health-care centres.

In particular, advantageously this apparatus is configurable according to the effective needs of the health-care centre, and can be updated and repaired in a fast way. In particular, this is obtained via the presence of an alignment system that enables access to the stack of sensors for operations of removal or insertion of a sensor module in a simple way and maintaining the alignment of the sensor modules, via removal and insertion of the alignment pins, which are accessible from outside the stack.

Moreover, the apparatus enables instantaneous evaluation along the three axes via a single application of the particle beam, thus reducing the costs and times for the QA procedures.

Of course, without prejudice to the principle of the invention, the details and the embodiments may vary, even considerably, with respect to what has been described herein purely by way of example, without thereby departing from the sphere of protection, which is defined by the annexed claims.

The casing of the frame may be made of plastic or aluminium.

In variants embodiments, the fixing frames may be sized so as to identify inside them a greater space in the direction of depth, for inserting an absorber layer.

The apparatus and method described are preferably oriented to the use in the calibration of beams of charged particles represented by protons, but can be used also in calibration of beams of charged particles represented by carbon ions or other types of ions or charged particles that present the characteristic of conveying the majority of the dose to a precise depth, following the profile of the Bragg peak.

## Claims

1. An apparatus for the calibration of beams of charged particles (1300), in particular protons or ions, emitted by systems for external radiotherapy, comprising at least one sensor including multilayer ionization chambers (10), which comprises a plurality of sensor channels (20),
**characterized in that**
said apparatus (100) comprises a plurality of modular elements (120) each including a respective supporting frame (130) which identifies a seat (132) configured for housing a sensor with multilayer ionization chambers (10) or a sensor (30) with ionization chamber, which is able to supply information on the two-dimensional profile of the beam of charged particles (1300),
said modular elements (120) being configured for being assembled together to form a stack (115) in the direction (Z) of propagation of the beam of charged particles (1300) by aligning said seats (132) in the direction of said particle beam (1300).

2. The apparatus according to Claim 1, **characterized in that** it comprises a plurality (N) of sensors with multilayer ionization chambers (10) and at least one sensor (30) with ionization chamber which is able to supply information on the two-dimensional profile of the beam of charged particles (1300).

3. The apparatus according to Claim 1 or Claim 2, **characterized in that** said supporting frame (130) comprises a first, outer, frame (131) having the shape of a C open at the top, and a second frame (132) having the shape of a C open at the top supported by said outer frame (131), said second frame (132) identifying said seat configured for housing a sensor with multilayer ionization chambers (10) or a sensor (30) with ionization chamber, which is able to supply information on the two-dimensional profile of the particle beam (1300).

4. The apparatus according to claim 3, **characterized in that** it comprises a fixing frame (135) configured (135f, 135p) for blocking within it a plurality of sensor channels (20) of said sensor (10) and configured (135e) for co-operating with guide means (132e) in said second frame (132).

5. The apparatus according to Claim 4, **characterized in that** said fixing frame comprises through holes (141), and said stack (115) comprises alignment pins (140) inserted in said through holes (141) of the fixing frame (135) comprised in said stack (115).

6. The apparatus according to any one of the preceding claims, **characterized in that** it comprises a casing (110; 210) containing said stack (115), said casing (110; 210) comprising two masks (111; 211), which can be applied to the outermost modular elements (120) in said stack (115), and a covering element (117; 217) that joins said masks (111; 211) at the top and is supported (131c) by said supporting frames (130) for supporting the stack (115) of modular elements (120).

7. The apparatus according to Claim 6, **characterized in that** each of said masks (211) comprises a plate (211a) associated to two corner elements (215), and said covering element comprises a plurality of rods (217) each supported (131c) by one of said supporting frames (130), said masks, corner elements, and rods being made, in particular, of metal.

8. A method for calibration of beams of charged particles (1300), in particular protons or ions, emitted by systems for external radiotherapy with charged particles, using a calibration apparatus according to any one of Claims 1 to 7.

9. The method for the calibration of beams of charged particles according to Claim 8, **characterized by**:
providing in said apparatus (100) a plurality (N) of sensors with multilayer ionization chambers (10) and at least one sensor (30) with ionization chamber, which is able to supply information on the two-dimensional profile of the particle beam (1300); and
acquiring information from said sensors with multilayer ionization chambers (10) and at least one sensor (30) with ionization chamber, which is able to supply information on the two-dimensional profile of the particle beam (1300), in one and the same measurement cycle for carrying out simultaneously the calibrations of interval, and of position, dimension and intensity of the particle beam (1300).

10. The method for the calibration of beams of charged particles according to Claim 8 or Claim 9, **characterized by** carrying out an operation of insertion or removal of a sensor element (10, 30) into/from said apparatus (100), which comprises the steps of:
removing the alignment pins (140) from the holes (141) of the fixing frames (135) of the sensor elements (10, 30) comprised in said stack (115);
inserting or removing a sensor element (10, 30) mounted in its own fixing frame (135) into/from the respective supporting frame (130); and
inserting the alignment pins (140) into the holes (141) of the fixing frames (135) of the sensor elements (10, 30) comprised in said stack (115).

## Patentansprüche

1. Vorrichtung zur Kalibrierung von Strahlen geladener Teilchen (1300), insbesondere Protonen oder Ionen, die von Systemen für die externe Strahlentherapie emittiert werden, umfassend mindestens einen Sensor mit mehrschichtigen Ionisationskammern (10), der eine Vielzahl von Sensorkanälen (20) umfasst,
**dadurch gekennzeichnet, dass**
die Vorrichtung (100) eine Vielzahl von modularen Elementen (120) umfasst, die jeweils einen entsprechenden Tragrahmen (130) aufweisen, der einen Sitz (132) identifiziert, welcher zur Aufnahme eines Sensors mit mehrschichtigen Ionisationskammern (10) oder eines Sensors (30) mit Ionisationskammer konfiguriert ist, der in der Lage ist, Informationen über das zweidimensionale Profil des Strahls geladener Teilchen (1300) zu liefern,
wobei die modularen Elemente (120) so konfiguriert sind, dass sie zusammengesetzt werden können, um einen Stapel (115) in der Ausbreitungsrichtung (Z) des Strahls geladener Teilchen (1300) zu bilden, indem die Sitze (132) in der Richtung des Teilchenstrahls (1300) ausgerichtet werden.

2. Vorrichtung nach Anspruch 1, **dadurch gekennzeichnet, dass** sie eine Vielzahl (N) von Sensoren mit Mehrschicht-Ionisationskammern (10) und mindestens einen Sensor (30) mit Ionisationskammer umfasst, der Informationen über das zweidimensionale Profil des Strahls geladener Teilchen (1300) liefern kann.

3. Vorrichtung nach Anspruch 1 oder Anspruch 2, **dadurch gekennzeichnet, dass** der Tragrahmen (130) einen ersten, äußeren Rahmen (131) mit der Form eines oben offenen C und einen zweiten Rahmen (132) mit der Form eines oben offenen C (132) umfasst, der von dem äußeren Rahmen (131) getragen wird, wobei der zweite Rahmen (132) den Sitz identifiziert, der zur Aufnahme eines Sensors mit Mehrschicht-Ionisationskammern (10) oder eines Sensors (30) mit Ionisationskammer konfiguriert ist, welcher Informationen über das zweidimensionale Profil des Teilchenstrahls (1300) liefern kann.

4. Vorrichtung nach Anspruch 3, **dadurch gekennzeichnet, dass** sie einen Befestigungsrahmen (135) umfasst, der so konfiguriert ist (135f, 135p), dass er eine Vielzahl von Sensorkanälen (20) des Sensors (10) in seinem Inneren blockiert, und der so konfiguriert ist (135e), dass er mit Führungsmitteln (132e) in dem zweiten Rahmen (132) zusammenwirkt.

5. Vorrichtung nach Anspruch 4, **dadurch gekennzeichnet, dass** der Befestigungsrahmen Durchgangslöcher (141) umfasst und der Stapel (115) Ausrichtungsstifte (140) umfasst, die in die Durchgangslöcher (141) des im Stapel (115) enthaltenen Befestigungsrahmens (135) eingesetzt sind.

6. Vorrichtung nach einem der vorhergehenden Ansprüche, **dadurch gekennzeichnet, dass** sie ein Gehäuse (110; 210) umfasst, das den Stapel (115) enthält, wobei das Gehäuse (110; 210) zwei Masken (111; 211) umfasst, die auf die äußersten modularen Elemente (120) in dem Stapel (115) aufgebracht werden können, und ein Abdeckelement (117; 217), das die Masken (111; 211) an der Oberseite verbindet und von den Tragrahmen (130) zum Tragen des Stapels (115) modularer Elemente (120) getragen wird (131c).

7. Vorrichtung nach Anspruch 6, **dadurch gekennzeichnet, dass** jede der Masken (211) eine Platte (211a) umfasst, die mit zwei Eckelementen (215) verbunden ist, und dass das Abdeckelement eine Vielzahl von Stäben (217) umfasst, die jeweils von einem der Tragrahmen (130) getragen werden (131c), wobei die Masken, die Eckelemente und die Stäbe insbesondere aus Metall hergestellt sind.

8. Verfahren zur Kalibrierung von Strahlen geladener Teilchen (1300), insbesondere Protonen oder Ionen, die von Systemen zur externen Strahlentherapie mit geladenen Teilchen emittiert werden, unter Verwendung einer Kalibrierungsvorrichtung nach einem der Ansprüche 1 bis 7.

9. Verfahren zur Kalibrierung von Strahlen geladener Teilchen nach Anspruch 8, **gekennzeichnet durch:**
Bereitstellen, in der Vorrichtung (100), einer Vielzahl (N) von Sensoren mit MehrschichtIonisationskammern (10) und mindestens einem Sensor (30) mit Ionisationskammer, der Informationen über das zweidimensionale Profil des Teilchenstrahls (1300) liefern kann; und
Erfassen von Informationen von den Sensoren mit Mehrschicht-Ionisationskammern (10) und mindestens einem Sensor (30) mit Ionisationskammer, der Informationen über das zweidimensionale Profil des Teilchenstrahls (1300) liefern kann, in ein und demselben Messzyklus, um gleichzeitig die Kalibrierungen des Intervalls und der Position, der Dimension und der Intensität des Teilchenstrahls (1300) durchzuführen.

10. Verfahren zur Kalibrierung von Strahlen geladener Teilchen nach Anspruch 8 oder Anspruch 9, **gekennzeichnet durch** die Durchführung eines Vorgangs des Einsetzens oder Entfernens eines Sensorelements (10, 30) in/aus der Vorrichtung (100), der die folgenden Schritte umfasst:
Entfernen der Ausrichtungsstifte (140) aus den Löchern (141) der Befestigungsrahmen (135) der Sensorelemente (10, 30), die in dem Stapel (115) enthalten sind;
Einsetzen oder Entfernen eines Sensorelements (10, 30), das in seinem eigenen Befestigungsrahmen (135) montiert ist, in/aus dem jeweiligen Tragrahmen (130); und
Einsetzen der Ausrichtungsstifte (140) in die Löcher (141) der Befestigungsrahmen (135) der Sensorelemente (10, 30), die in dem Stapel (115) enthalten sind.

## Revendications

1. Appareil pour l'étalonnage de faisceaux de particules chargées (1300), en particulier de protons ou d'ions, émis par des systèmes pour radiothérapie externe, comprenant au moins un capteur incluant des chambres d'ionisation à couches multiples (10), qui comprend une pluralité de canaux de capteur (20),
**caractérisé en ce que**
ledit appareil (100) comprend une pluralité d'éléments modulaires (120) incluant chacun un cadre de support (130) respectif qui identifie un siège (132) configuré pour recevoir un capteur ayant des chambres d'ionisation à couches multiples (10) ou un capteur (30) ayant une chambre d'ionisation, qui est apte à fournir des informations sur le profil bidimensionnel du faisceau de particules chargées (1300),
lesdits éléments modulaires (120) étant configurés pour être assemblés ensemble pour former un empilement (115) dans la direction (Z) de propagation du faisceau de particules chargées (1300) par l'alignement desdits sièges (132) dans la direction dudit faisceau de particules (1300).

2. Appareil selon la revendication 1, **caractérisé en ce qu'**il comprend une pluralité (N) de capteurs ayant des chambres d'ionisation à couches multiples (10) et au moins un capteur (30) ayant une chambre d'ionisation qui est apte à fournir des informations sur le profil bidimensionnel du faisceau de particules chargées (1300).

3. Appareil selon la revendication 1 ou la revendication 2, **caractérisé en ce que** ledit cadre de support (130) comprend un premier cadre externe (131) ayant la forme d'un C ouvert sur le haut, et un second cadre (132) ayant la forme d'un C ouvert sur le haut porté par ledit cadre externe (131), ledit second cadre (132) identifiant ledit siège configuré pour recevoir un capteur ayant des chambres d'ionisation à couches multiples (10) ou un capteur (30) ayant une chambre d'ionisation, qui est apte à fournir des informations sur le profil bidimensionnel du faisceau de particules (1300).

4. Appareil selon la revendication 3, **caractérisé en ce qu'**il comprend un cadre de fixation (135) configuré (135f, 135p) pour bloquer en son sein une pluralité de canaux de capteur (20) dudit capteur (10) et configuré (135e) pour coopérer avec des moyens de guidage (132e) dans ledit second cadre (132).

5. Appareil selon la revendication 4, **caractérisé en ce que** ledit cadre de fixation comprend des trous traversants (141), et ledit empilement (115) comprend des broches d'alignement (140) insérées dans lesdits trous traversants (141) du cadre de fixation (135) compris dans ledit empilement (115).

6. Appareil selon l'une quelconque des revendications précédentes, **caractérisé en ce qu'**il comprend un boîtier (110 ; 210) contenant ledit empilement (115), ledit boîtier (110 ; 210) comprenant deux masques (111 ; 211), qui peuvent être appliqués sur les éléments modulaires les plus externes (120) dans ledit empilement (115), et un élément de couverture (117 ; 217) qui joint lesdits masques (111 ; 211) sur le haut et est porté (131c) par lesdits cadres de support (130) pour porter l'empilement (115) d'éléments modulaires (120).

7. Appareil selon la revendication 6, **caractérisé en ce que** chacun desdits masques (211) comprend une plaque (211a) associée à deux éléments d'angle (215), et ledit élément de couverture comprend une pluralité de tiges (217) portées chacune (131c) par l'un desdits cadres de support (130), lesdits masques, éléments d'angle et tiges étant constitués, en particulier, de métal.

8. Procédé pour l'étalonnage de faisceaux de particules chargées (1300), en particulier de protons ou d'ions, émis par des systèmes pour radiothérapie externe avec des particules chargées, à l'aide d'un appareil d'étalonnage selon l'une quelconque des revendications 1 à 7.

9. Procédé pour l'étalonnage de faisceaux de particules chargées selon la revendication 8, **caractérisé par** :
le ménagement, dans ledit appareil (100), d'une pluralité (N) de capteurs ayant des chambres d'ionisation à couches multiples (10) et d'au moins un capteur (30) ayant une chambre d'ionisation, qui est apte à fournir des informations sur le profil bidimensionnel du faisceau de particules (1300) ; et
l'acquisition d'informations à partir desdits capteurs ayant des chambres d'ionisation à couches multiples (10) et dudit au moins un capteur (30) ayant une chambre d'ionisation, qui est apte à fournir des informations sur le profil bidimensionnel du faisceau de particules (1300), dans un seul et même cycle de mesure pour mettre en œuvre simultanément les étalonnages d'intervalle, et de position, de dimension et d'intensité du faisceau de particules (1300).

10. Procédé pour l'étalonnage de faisceaux de particules chargées selon la revendication 8 ou la revendication 9, **caractérisé par** la mise en œuvre d'une opération d'insertion ou de retrait d'un élément capteur (10, 30) dans ledit/à partir dudit appareil (100), qui comprend les étapes de :
le retrait des broches d'alignement (140) à partir des trous (141) des cadres de fixation (135) des éléments capteurs (10, 30) compris dans ledit empilement (115) ;
l'insertion ou le retrait d'un élément capteur (10, 30) monté dans son propre cadre de fixation (135) dans le/à partir du cadre de support (130) respectif ; et
l'insertion des broches d'alignement (140) dans les trous (141) des cadres de fixation (135) des éléments capteurs (10, 30) compris dans ledit empilement (115).
